# EUROPÄISCHE PATENTANMELDUNG

(11) **EP 4 632 262 A1**
(43) Veröffentlichungstag der Anmeldung: **15.10.2025**
(21) Anmeldenummer: 24169449.6
(22) Anmeldetag: 10.04.2024
(51) Int. Cl.: F16M 11/04, F16M 11/22, F16M 13/02, H04M 1/02, F16M 13/00

(54) **MOBILGERÄTEHALTERUNG**

(71) Anmelder: Forstgarten International Holding GmbH, 9016 St. Gallen (CH)
(72) Erfinder: KALTENBACH, Stefan, 9445 Rebstein (CH)
(74) Vertreter: Schmidt, Christian

(57) **Zusammenfassung**

Mobilgerätehalterung (100), umfassend ein Fixiermittel zur Fixierung eines Mobilgeräts (200), einen Grundkörper (10) und einen Hohlraum (20) zur Aufbewahrung von Zubehör für das Mobilgerät, wobei der Hohlraum im Grundkörper angeordnet ist.

## Beschreibung

### Hintergrund der Erfindung

Die Erfindung betrifft eine Mobilgerätehalterung zur Aufstellung eines Mobilgeräts in einer schrägen, dem Betrachter zugewandten Position mit zusätzlichen funktionalen Merkmalen, die insbesondere für den Einsatz auf Reisen vorteilhaft sind.

Aus dem Stand der Technik sind Mobilgerätehalterungen bekannt, die die Nutzung der Funktionen von Smartphones oder Tablets erlauben, ohne diese Mobilgeräte dauerhaft in der Hand halten zu müssen. Derartige Halterungen können beispielsweise zur Auflage auf einer Schreibtischoberfläche oder zur Befestigung in einem Fahrzeugcockpit ausgeführt sein. Besonders beliebt sind Mobilgerätehalterungen bei Menschen, die ihr Mobilgerät regelmäßig und in kurzen Abständen an verschiedenen Orten zuverlässig nutzen müssen.

### Zusammenfassende Darstellung der Erfindung

Es ist die Aufgabe der Erfindung eine verbesserte Mobilgerätehalterung bereitzustellen. Diese Aufgabe wird durch die hier offenbarte Mobilgerätehalterung gelöst, wie z.B. durch die im beigefügten unabhängigen Anspruch definierte Mobilgerätehalterung. Vorteilhafte Ausgestaltungen sind Gegenstand der abhängigen Ansprüche und/oder in der nachstehenden Beschreibung dargelegt.

Die erfindungsgemäße Mobilgerätehalterung, umfasst ein Fixiermittel zur Fixierung eines Mobilgeräts. Das Mobilgerät kann ein Mobiltelefon, wie z.B. ein Smartphone und/oder ein Tablet bzw. Tabletcomputer sein. Die Mobilgerätehalterung umfasst außerdem einen Grundkörper und einen Hohlraum zur Aufbewahrung von Zubehör für das Mobilgerät, wobei der Hohlraum im Grundkörper angeordnet ist. Da der Grundkörper dem Nutzer die Möglichkeit bietet Zubehörgeräte in der Mobilgerätehalterung aufzubewahren wird die Verwaltung von Zubehörgeräten für das Mobilgerät erleichtert.

In einer Ausführungsform ist der Hohlraum seitlich versetzt von dem Fixiermittel im Grundkörper angeordnet. Die Auflagefläche der Mobilgerätehalterung kann somit vergrößert werden ohne die Masse des Grundkörpers wesentlich zu erhöhen.

In einer Ausführungsform ist das Fixiermittel geeignet, Mobilgeräte mit unterschiedlichen Abmessungen aufzunehmen. Das Fixiermittel kann verstellbar ausgeführt sein, sodass das Fixiermittel an unterschiedlich dimensionierte Mobilgeräte angepasst werden kann. Demnach ist die Verwendung der Mobilgerätehalterung nicht auf einen bestimmten Mobilgerätetyp oder ein bestimmtes Mobilgerätemodel eingeschränkt.

In einer Ausführungsform sind der Grundkörper und das Fixiermittel als ein integrales bzw. einteiliges Bauteil ausgeführt.

In einer Ausführungsform ist das Fixiermittel so ausgeführt, dass das Mobilgerät durch Reaktionskräfte auf ein Kippmoment in einem spitzen Winkel im Fixiermittel stabilisiert wird. Das Fixiermittel kann so ausgeführt sein, dass bei waagrechter Positionierung der Mobilgerätehalterung unter Schwerkraftbelastung des Mobilgeräts eine Schrägstellung des Mobilgeräts im Fixiermittel in einem spitzen Winkel erfolgt.

In einer Ausführungsform umfasst das Fixiermittel ein, zwei oder mehrere Fixierteile.

In einer Ausführungsform ist das eine, die zwei oder die mehreren Fixierteile als Nut, z.B. als Kerbnut, ausgeführt.

In einer Ausführungsform ist die Breite der Nut größer als die Dicke bzw. Breite des Mobilgeräts.

In einer Ausführungsform ist die Breite der Nut größer als 5 mm.

In einer Ausführungsform ist die Breite der Nut kleiner als 16 mm.

In einer Ausführungsform ist die Breite der Nut größer als 5 mm und kleiner als 16 mm. Die Breite der Nut kann einen Wert im Bereich von 6 mm bis 15 mm aufweisen.

In einer Ausführungsform ist der Grundkörper mehrteilig. Der Grundkörper kann zweiteilig sein. Der Grundkörper kann ein erstes Grundkörperteil und ein zweites Grundkörperteil aufweisen. Der Grundkörper kann durch eine mittig symmetrische Trennung in das erste und zweite Grundkörperteil geteilt sein. Das erste Grundkörperteil und das zweite Grundkörperteil können dieselbe Masse aufweisen. Das erste Grundkörperteil kann mit dem zweiten Grundkörperteil verbunden sein. Das erste Grundkörperteil kann beweglich mit dem zweiten Grundkörperteil verbunden sein.

In einer Ausführungsform ist die Verbindung zwischen dem ersten Grundkörperteil und dem zweiten Grundkörperteil eine wiederherstellbare, lösbare Verbindung. Die wiederherstellbare, lösbare Verbindung kann eine Magnetverbindung sein.

In einer Ausführungsform ist das erste Grundkörperteil mit dem zweiten Grundkörperteil beweglich verbunden. Das erste Grundkörperteil und das zweite Grundkörperteil können so miteinander verbunden sein, dass das erste Grundkörperteil relativ zum zweiten Grundkörperteil schwenkbar ist.

In einer Ausführungsform weist die Mobilgerätehalterung ein Scharniergelenk auf. Das Scharniergelenk kann das erste Grundkörperteil mit dem zweiten Grundkörperteil schwenkbar beweglich verbinden.

In einer Ausführungsform ist das Scharniergelenk an der Grundkörperrückseite positioniert.

In einer Ausführungsform ist das Scharniergelenk mittig zwischen dem ersten und zweiten Grundkörperteil positioniert.

In einer Ausführungsform ist die Mobilgerätehalterung so ausgeführt, dass bei zunehmenden Schwenkwinkel zwischen dem ersten und zweiten Grundkörperteil die Breite der Nut abnimmt. Die Mobilgerätehalterung kann so ausgeführt sein, dass sich bei zunehmenden Schwenkwinkel die Mobilgerätehalterung verbreitert.

In einer Ausführungsform weist das erste Grundkörperteil einen ersten Teilbereich des Hohlraums und das zweite Grundkörperteil einen zweiten Teilbereich des Hohlraums auf.

Der erste Teilbereich des Hohlraums und der zweite Teilbereich des Hohlraums können dasselbe Volumen bzw. die gleiche Größe aufweisen. Die Verbindung aus dem ersten Grundkörperteil und dem zweiten Grundkörperteil kann den Hohlraum zumindest teilweise verschließen. Die Verbindung aus dem ersten Grundkörperteil und dem zweiten Grundkörperteil kann den Hohlraum vollständig verschließen.

In einer Ausführungsform ist die Mobilgerätehalterung so ausgeführt ist, dass durch eine Bewegung des ersten Grundkörperteils relativ zum zweiten Grundkörperteil eine Zugangsöffnung zum Hohlraum geschaffen wird. Die Bewegung kann eine Schwenkbewegung sein. Die Zugangsöffnung kann eine zusätzliche Öffnung des Hohlraums sein. Alternativ kann die Zugangsöffnung die einzige Öffnung des Hohlraums sein. Die Öffnung bzw. zusätzliche Öffnung bzw. Zugangsöffnung kann eine Größe aufweisen, die geeignet ist ein oder mehrere Zubehörgeräte für das Mobilgerät aus dem Hohlraum zu entnehmen oder in den Hohlraum einzufügen.

In einer Ausführungsform ist die Mobilgerätehalterung so ausgeführt ist, dass durch die Bewegung des ersten Grundkörperteils relativ zum zweiten Grundkörperteil das Fixiermittel an die Abmessungen des Mobilgeräts anpassbar ist. Demnach kann der Nutzer die Mobilgerätehalterung für unterschiedlich dimensionierte Mobilgeräte nutzen.

Die Anpassung des Fixiermittels an das jeweils verwendete Mobilgerät sowie die Freigabe bzw. Öffnung des Hohlraums kann somit in einer Bewegung erfolgen und erleichtert dadurch die Handhabung der Halterung.

In einer Ausführungsform ist die Mobilgerätehalterung so ausgeführt ist, dass die Bewegung des ersten Grundkörperteils relativ zum zweiten Grundkörperteil den Hohlraum, z.B. in zwei gleichgroße Räume, teilt.

In einer Ausführungsform weist das erste Grundkörperteil ein erstes Fixierteil und das zweite Grundkörperteil ein zweites Fixierteil auf.

Das erste Fixierteil kann so ausgeführt sein, dass es gemeinsam mit dem ersten Grundkörperteil beweglich ist. Zusätzlich oder alternativ kann das zweite Fixierteil so ausgeführt sein, dass es gemeinsam mit dem zweiten Grundkörperteil beweglich ist. Das erste Fixierteil kann als ein integrales Teil des ersten Grundkörperteils und das zweite Fixierteil als ein integrales Teil des zweiten Grundkörperteils ausgeführt sein. Das erste Fixierteil kann so ausgeführt sein, dass es relativ zum ersten Grundkörperteil unbeweglich ist. Zusätzlich oder alternativ kann das zweite Fixierteil so ausgeführt sein, dass es relativ zum zweiten Grundkörperteil unbeweglich ist.

In einer Ausführungsform weist das Fixiermittel das erste Fixierteil und das zweite Fixierteil auf. Das erste Fixierteil kann an dem ersten Grundkörperteil und das zweite Fixierteil kann an dem zweiten Grundkörperteil vorgesehen sein, sodass das erste Fixierteil mit dem ersten Grundkörperteil und das zweite Fixierteil mit dem zweiten Grundkörperteil beweglich ist. Das erste Fixierteil kann an das erste Grundkörperteil und das zweite Fixierteil kann an das zweite Grundkörperteil gefügt sein. Das erste Fixierteil und das erste Grundkörperteil können als einstückiges bzw. integrales Bauteil ausgeführt sein. Das zweite Fixierteil und das zweite Grundkörperteil können als einstückiges bzw. integrales Bauteil ausgeführt sein.

In einer Ausführungsform ist der Grundkörper so ausgeführt, dass eine Bewegung des ersten Grundkörperteils relativ zum zweiten Grundkörperteil eine Bewegung des ersten Fixierteils relativ zum zweiten Fixierteil bewirkt. Die Bewegung kann eine Schwenkbewegung sein.

In einer Ausführungsform ist der Hohlraum seitlich zwischen dem Fixiermittel und dem Scharniergelenk im Grundkörper angeordnet.

In einer Ausführungsform ist die Zugangsöffnung von der Grundkörpervorderseite zugänglich. Die Zugangsöffnung kann zwischen dem ersten und zweiten Fixierteil angeordnet sein.

In einer Ausführungsform ist die Zugangsöffnung seitlich zwischen dem Fixiermittel und dem Scharniergelenk im Grundkörper angeordnet.

In einer Ausführungsform weist die Mobilgerätehalterung eine Aussparung bzw. eine Nutzaussparung zwischen dem ersten und zweiten Fixierteil auf. Die Aussparung kann dem Nutzer helfen die Zugänglichkeit von Anschlussstellen und Bedienelementen des Mobilgeräts zu gewährleisten sowie Signalaus- und Signaleingabeelemente wie Lautsprecher oder Mikrophone freizuhalten. Demnach wird eine Einschränkung oder Behinderung der Funktionen des Mobilgeräts während der Fixierung in der Mobilgerätehalterung verhindert. Die Mobilgerätehalterung kann mehr als eine, wie z.B. zwei, drei oder vier, Aussparungen zwischen dem ersten und zweiten Fixierteil aufweisen.

In einer Ausführungsform weist der Grundkörper mindestens ein Verschlusselement auf, wobei die Mobilgerätehalterung so ausgeführt ist, dass die Bewegung des ersten Grundkörperteils relativ zum zweiten Grundkörperteil blockiert ist, wenn das Verschlusselement mit dem ersten und zweiten Grundkörperteil verbunden ist. Das Verschlusselement kann so ausgeführt sein, dass es das erste Grundkörperteils an das zweite Grundkörperteil lösbar fügt.

In einer Ausführungsform umfasst das Verschlusselement ein drittes Grundkörperteil.

In einer Ausführungsform umfasst das Verschlusselement ein Zubehörgerät für das Mobilgerät.

In einer Ausführungsform ist das Verschlusselement zur Aufbewahrung von Zubehör für das Mobilgerät geeignet.

In einer Ausführungsform umfasst das Verschlusselement ein Kabel.

In einer Ausführungsform umfasst das Verschlusselement ein drittes Grundkörperteil und ein Zubehörgerät für das Mobilgerät wie z.B. ein Kabel.

In einer Ausführungsform ist das Verschlusselement so ausgeführt, dass die Zugangsöffnung zum Hohlraum durch das Verschlusselement verschlossen ist, wenn das Verschlusselement an das erste und zweite Grundkörperteil gefügt ist.

In einer Ausführungsform ist das erste Grundkörperteil durch eine lösbare Magnetverbindung an das zweite Grundkörperteil gefügt.

In einer Ausführungsform weist das Fixiermittel ein, zwei oder mehrere Ausgleichselemente auf. Das Fixiermittel kann so ausgeführt sein, dass die Breite der Nut durch das Einlegen ein, zwei oder mehrerer Ausgleichselemente verändert werden kann. Das Ausgleichselement kann magnetisch und/oder durch Klemmkräfte in die Nut gefügt sein. Das Ausgleichselement kann elastisch oder deformierbar sein.

In einer Ausführungsform weist die Mobilgerätehalterung eine Energiequelle auf, wobei der Hohlraum geeignet ist die Energiequelle aufzunehmen.

In einer Ausführungsform ist die Energiequelle geeignet die Mobilgerätehalterung in einer horizontalen Position an eine vertikale Fläche zu fügen.

In einer Ausführungsform weist die Mobilgerätehalterung ein Netzteil auf, wobei der Hohlraum geeignet ist das Netzteil aufzunehmen.

In einer Ausführungsform ist das Netzteil geeignet die Mobilgerätehalterung in einer horizontalen Position an eine vertikale Fläche zu fügen.

In einer Ausführungsform weist die Mobilgerätehalterung eine Energiequelle und ein Netzteil auf, wobei der Hohlraum geeignet ist die Energiequelle und das Netzteil aufzunehmen.

In einer Ausführungsform ist die Energiequelle und das Netzteil geeignet die Mobilgerätehalterung in einer horizontalen Position an eine vertikale Fläche zu fügen.

In einer Ausführungsform ist die Energiequelle lösbar an das Netzteil gefügt.

In einer Ausführungsform ist das Netzteil beweglich mit der Energiequelle verbunden.

In einer Ausführungsform ist das Netzteil geeignet eine Bewegung des ersten Grundkörperteils relativ zum zweiten Grundkörperteil zu blockieren. Das Netzteil kann geeignet sein die Bewegung des ersten Grundkörperteils relativ zum zweiten Grundkörperteil zu blockieren, wenn das Netzteil im Hohlraum positioniert ist.

In einer Ausführungsform weist die Mobilgerätehalterung ein drahtloses Ladeelement auf. Das drahtlose Ladelement kann durch die Energiequelle mit Energie versorgt werden.

In einer Ausführungsform ist die Energiequelle geeignet das Mobilgerät mit Energie zu versorgen, wenn das Mobilgerät im Fixiermittel und/oder die Energiequelle im Hohlraum positioniert sind.

In einer Ausführungsform umfasst die Mobilgerätehalterung das Fixiermittel zur Fixierung des Mobilgeräts, den Grundkörper und den Hohlraum zur Aufbewahrung von Zubehör für das Mobilgerät, wobei der Hohlraum im Grundkörper angeordnet ist. Der Grundkörper kann das erste Grundkörperteil und das zweites Grundkörperteil aufweisen, wobei das erste Grundkörperteil beweglich mit dem zweiten Grundkörperteil verbunden ist. Die Mobilgerätehalterung kann so ausgeführt sein, dass durch die Bewegung des ersten Grundkörperteils relativ zum zweiten Grundkörperteil die Zugangsöffnung zum Hohlraum zur Entnahme des Zubehörs geschaffen wird. Ferner kann durch die Bewegung des ersten Grundkörperteils relativ zum zweiten Grundkörperteil das Fixiermittel an die Abmessungen des Mobilgeräts anpassbar sein. Der erste Grundkörperteil kann mit dem zweiten Grundkörperteil schwenkbar verbunden sein. Der Grundkörper kann das dritte Grundkörperteil aufweisen. Die Mobilgerätehalterung kann so ausgeführt sein, dass die Bewegung des ersten Grundkörperteils relativ zum zweiten Grundkörperteil blockiert ist, wenn das dritte Grundkörperteil mit dem ersten und zweiten Grundkörperteil verbunden ist. Das Fixiermittel kann die Nut zur Aufnahme des Mobilgeräts aufweisen, und wobei die Nut so ausgeführt ist, dass bei waagrechter Positionierung der Mobilgerätehalterung unter Schwerkraftbelastung des Mobilgeräts eine Schrägstellung des Mobilgeräts in der Nut in einem spitzen Winkel erfolgt. Das Fixiermittel kann das erste Fixierteil und das zweite Fixierteil aufweisen, wobei das erste Fixierteil an dem ersten Grundkörperteil und das zweite Fixierteil an dem zweiten Grundkörperteil angeordnet ist, sodass das erste Fixierteil mit dem ersten Grundkörperteil und das zweite Fixierteil mit dem zweiten Grundkörperteil beweglich ist. Die Zugangsöffnung kann von der Grundkörpervorderseite zugänglich sein. Der Hohlraum kann seitlich zwischen dem Fixiermittel und dem Scharniergelenk im Grundkörper angeordnet sein. Die Mobilgerätehalterung kann die Energiequelle aufweisen und der Hohlraum kann geeignet sein die Energiequelle aufzunehmen. Die Energiequelle kann geeignet sein die Mobilgerätehalterung in einer horizontalen Position an eine vertikale Fläche lösbar zu fügen. Die Mobilgerätehalterung kann das Kabel aufweisen, wobei das Kabel geeignet ist das erste Grundkörperteil mit dem zweiten Grundkörperteil zu verbinden und/oder eine Bewegung des ersten Grundkörperteils relativ zum zweiten Grundkörperteil zu blockieren. Die Mobilgerätehalterung kann das Netzteil aufweisen, und das Netzteil kann geeignet sein im Hohlraum gelagert zu werden und/oder eine Bewegung des ersten Grundkörperteils relativ zum zweiten Grundkörperteil zu blockieren.

Wir weisen darauf hin, dass die oben und unten in Verbindung mit verschiedenen Ausführungsformen beschriebenen Merkmale miteinander kombiniert werden können, auch wenn eine solche Kombination nicht ausdrücklich offenbart wird.

Weitere Merkmale und Vorteile der Mobilgerätehalterung und insbesondere der vorgeschlagenen Ausführungsformen werden aus der folgenden Beschreibung in Verbindung mit den Figuren ersichtlich.

### Kurzbeschreibung der Figuren

Figur 1 zeigt zwei Schnittdarstellungen einer ersten Ausführungsform der Mobilgerätehalterung.
Figur 2 zeigt zwei Schnittdarstellungen einer weiteren Ausführungsform der Mobilgerätehalterung.
Figur 3 zeigt zwei Schnittdarstellungen einer weiteren Ausführungsform der Mobilgerätehalterung.
Figur 4 zeigt zwei Schnittdarstellungen einer weiteren Ausführungsform der Mobilgerätehalterung.
Figur 5 zeigt zwei Schnittdarstellungen einer weiteren Ausführungsform der Mobilgerätehalterung.
Figur 6 zeigt zwei Schnittdarstellungen einer weiteren Ausführungsform der Mobilgerätehalterung.
Figur 7 zeigt zwei Schnittdarstellungen einer weiteren Ausführungsform der Mobilgerätehalterung.
Figur 8 zeigt zwei Schnittdarstellungen einer weiteren Ausführungsform der Mobilgerätehalterung.
Figur 9 zeigt zwei weitere Schnittdarstellungen der Ausführungsform gemäß Figur 8.
Figur 10 und 11 zeigen Schnittdarstellungen gemäß der Ausführungsform der Figuren 8 und 9 mit einem Mobilgerät.
Figur 12 zeigt eine Schnittdarstellung einer weiteren Ausführungsform der Mobilgerätehalterung mit einem Mobilgerät.
Figur 13 und 14 zeigen Schnittdarstellungen gemäß einer weiteren Ausführungsform der Mobilgerätehalterung mit einem Mobilgerät.
Figur 15 zeigt eine Schnittdarstellung einer weiteren Ausführungsform der Mobilgerätehalterung mit einem Mobilgerät.
Figur 16 zeigt zwei Darstellungen einer weiteren Ausführungsform der Mobilgerätehalterung.

### Eingehende Beschreibung

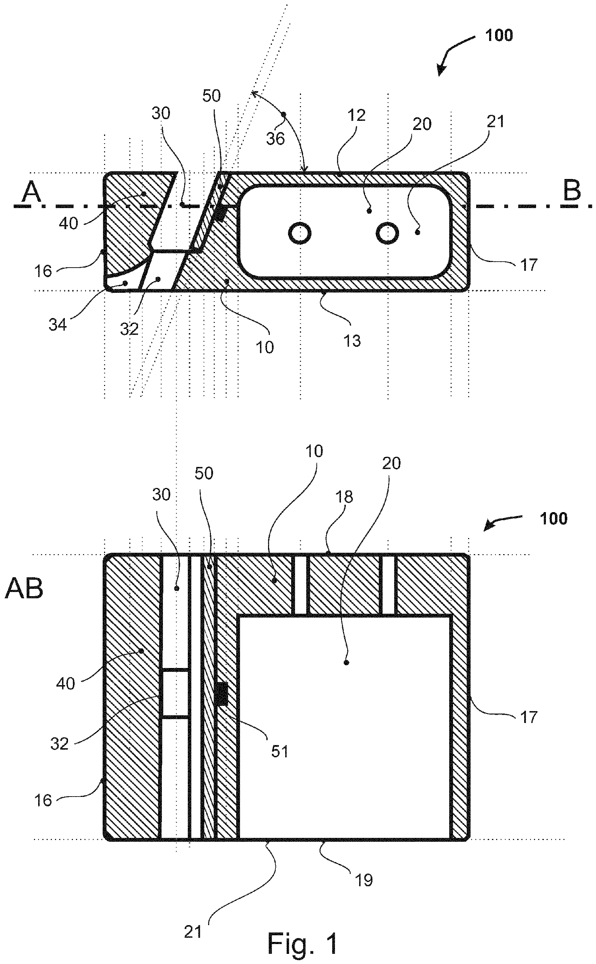

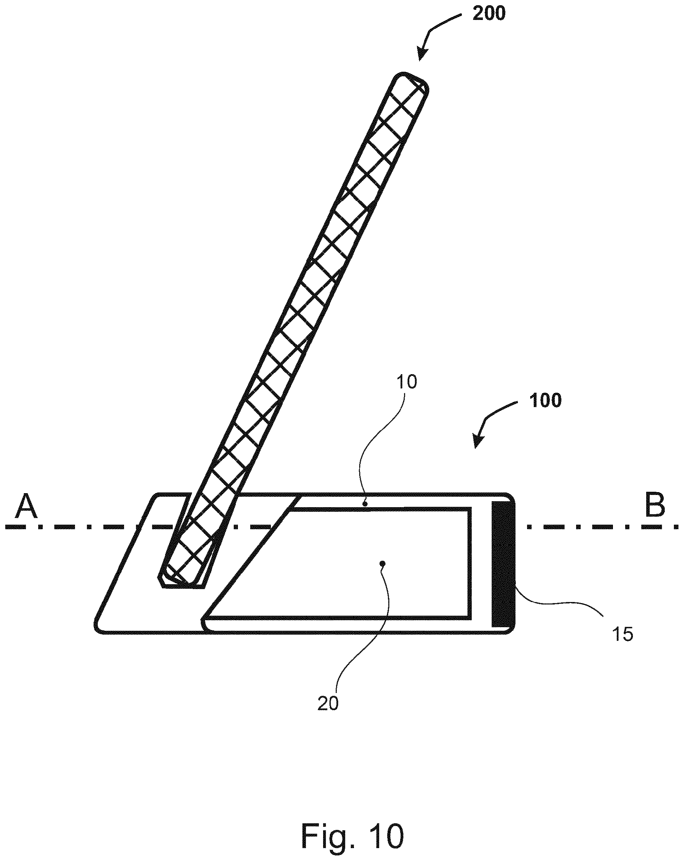

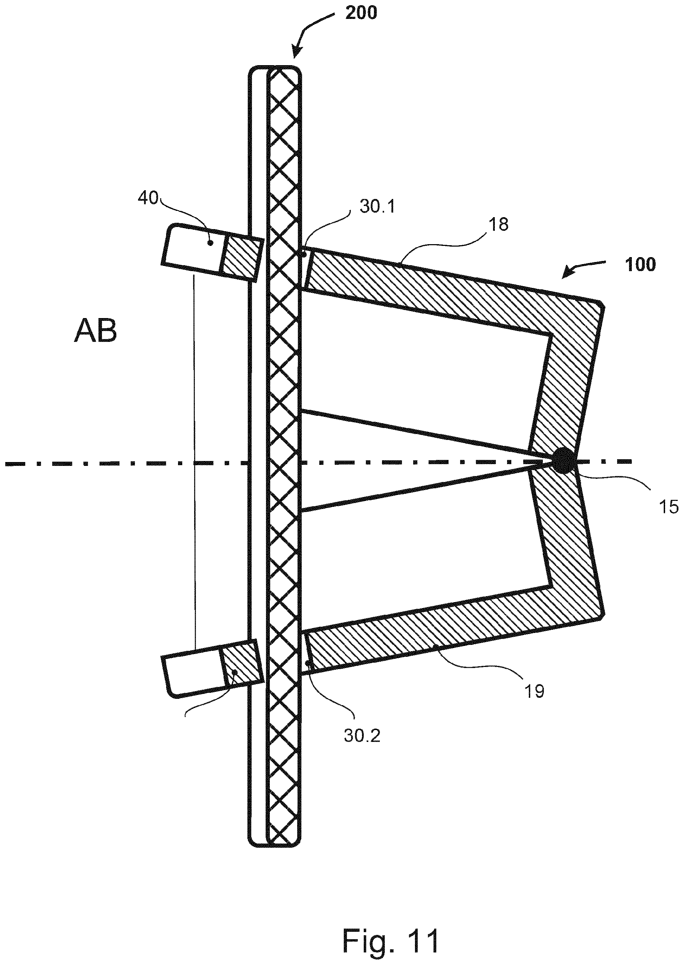

Die Figuren 1-16 zeigen beispielhafte erfindungsgemäße Mobilgerätehalterungen 100 zum Halten eines Mobilgeräts 200. Das Mobilgerät 200 ist z.B. ein Mobiltelefon oder ein Tablet Computer. Die dem Nutzer zugewandte Seite der Halterung 100 ist in den folgenden Figuren jeweils links bzw. in Richtung A. In den Figuren 10, 12-15, sowie in den Figuren 1-9 oben, ist jeweils eine Seitenansicht eines vertikalen Schnittes durch die Mobilgerätehalterungen 100 dargestellt. In den Figuren 1-9 unten sowie in Figur 11 ist jeweils eine Draufsicht eines horizontalen Schnitts A-B durch die Halterung 100 dargestellt.

Die Mobilgerätehalterungen 100 weisen jeweils ein Fixiermittel zur Fixierung eines Mobilgeräts 200 und mindestens einen Grundkörper 10 auf. Das Fixiermittel weist ein Fixierteil in Form einer Nut 30 bzw. Kerbnut auf. Die Nut 30 kann einteilig oder mehrteilig sein. Die Nut 30 kann eine oder mehrere Aussparungen aufweisen, die die Nut in zwei oder mehrere Nuten aufteilt.

Der Grundkörper 10 weist eine Grundkörperoberseite 12 sowie eine Grundkörperunterseite 13 auf. Die Grundkörperunterseite 13 bildet die untere Fläche des Grundkörpers 10 bzw. der Mobilgerätehalterung 100. Die Grundkörperunterseite 13 kann die Auflagefläche des Grundkörpers 10 bzw. der Mobilgerätehalterung 100 bilden. Die Grundkörperoberseite 12 stellt die obere Fläche der Halterung 100 dar und ist vertikal versetzt über der Grundkörperunterseite 13 angeordnet. Der Grundkörper 10 weist eine Grundkörpervorderseite 16 und eine Grundkörperrückseite 17 auf, wobei die Grundkörpervorderseite 16 die Mobilgerätehalterung 100 nach vorne, d.h. in Richtung des Benutzers bzw. in Richtung A, und die Grundkörperrückseite 17 die Mobilgerätehalterung 100 nach hinten, d.h. weg vom Benutzer bzw. in Richtung B, abgrenzt. Die Grundkörpervorderseite 16 kann teilweise oder vollständig abgeschrägt sein. Der Grundkörper 10 weist zwei Grundkörperseitenteile 18 und 19 auf. Die Grundkörperseitenteile 18 und 19 erstrecken sich senkrecht zu der Grundkörperober- und Unterseite 12 und 13. Der hier quaderförmig gezeichnete Grundkörper 10 kann auch von der Quaderform abweichen, so können z.B. Trapezkörper verwendet werden. Die Kanten und Ecken des Grundkörpers 10 können abgerundet sein und/oder Fasen aufweisen. Die Grundkörperoberseite 12 kann relativ zur Grundkörperunterseite 13 zumindest teilweise in einem nicht parallelen Winkel verlaufen. Die Grundkörperunterseite 13 kann kleine flache Standfüße aufweisen (nicht dargestellt). Der Grundkörper 10 kann einteilig oder mehrteilig ausgeführt sein. In mehrteiligen Ausführungsformen des Grundkörpers 10 kann der Grundkörper so ausgeführt sein, dass die einzelnen Teile des Grundkörpers wiederholt lösbar miteinander verbunden bzw. aneinandergefügt werden können. Dies kann durch formschlüssige oder kraftschlüssige Verbindungen erfolgen. Im Rahmen der vorliegenden Offenbarung umfassen die Begriffe "Fügen", "angefügt", "Verbinden", usw. alle Fertigungsverfahren nach der DIN 8593. Die Mobilgerätehalterung 100 kann auf der Grundkörperunterseite 13 ausziehbare, ausschwenkbare oder einsteckbare Verbreiterungselemente umfassen (nicht dargestellt). Diese können so ausgebildet sein, dass sie den Grundkörper 10 gegen ein Verkippen stabilisieren.

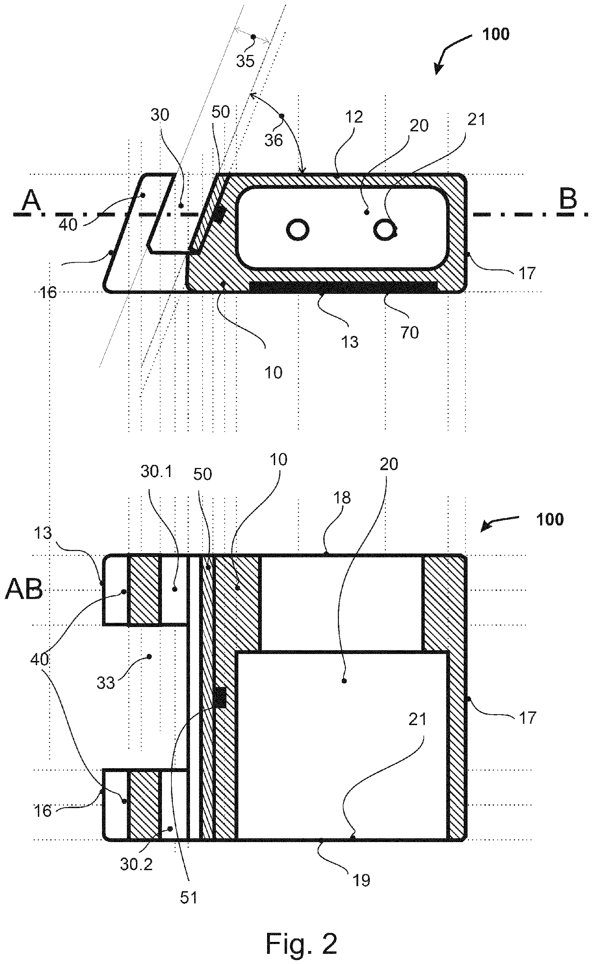

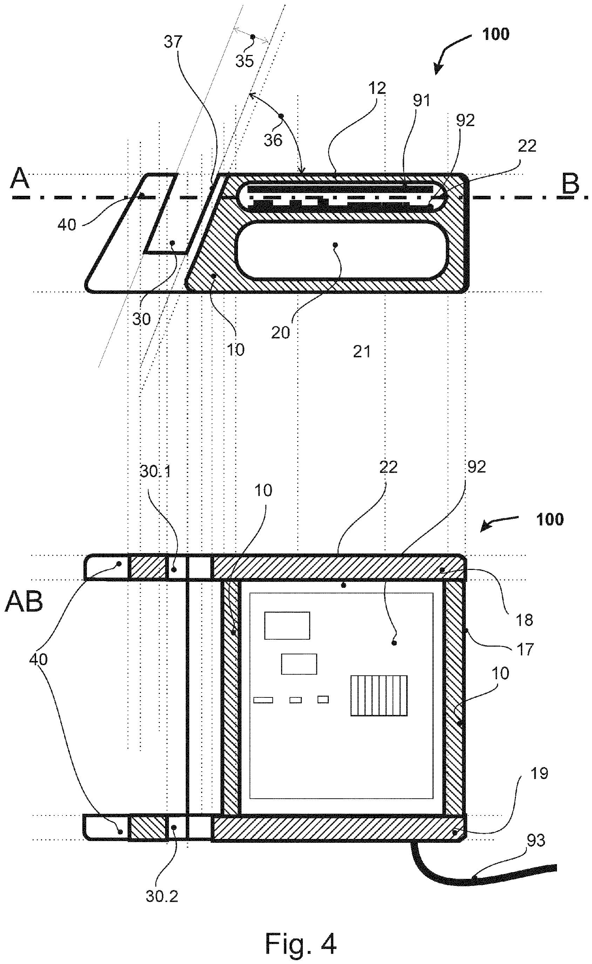

Die Grundkörperseitenteile 18 und 19 können wahlweise parallel sein und senkrecht zur Nut 30 oder in einem nicht senkrechten Winkel zur Nut oder nicht parallel zueinander verlaufen (nicht dargestellt). Die Nut 30 verläuft transversal zu den Grundkörperseitenteilen 18 und 19 in einem spitzen Winkel im quaderartigen Grundkörper 10, wobei der spitze Winkel steiler als fünfundvierzig Grad ist. Die Nut 30 ist so ausgeführt, dass bei waagrechter Positionierung der Mobilgerätehalterung 100 unter Schwerkraftbelastung des Mobilgeräts 200 eine Schrägstellung des Mobilgeräts in der Nut in einem spitzen Winkel erfolgt. Im Kontext der vorliegenden Offenbarung bezieht sich der Ausdruck waagrechte oder horizontale Positionierung auf die Anordnung eines Objekts, so dass es parallel zum Horizont oder zu einer horizontalen Referenzlinie ausgerichtet ist. Es bedeutet, dass das Objekt in einer flachen, geraden Linie positioniert ist, ohne Neigung nach oben oder unten. Die Querschnittsbreite der Nut 30 bzw. die Nutbreite 35 (siehe Figuren 2-4) ist so ausgeführt, dass sie größer ist als die Breite des Mobilgeräts 200. Die Nutbreite 35 kann entlang der Länge bzw. Höhe der Nut 30 parallel sein (siehe z.B. Figur 4) oder variieren (siehe z.B. die Nutzbreite 35 kann in Richtung der Grundkörperoberseite 12 zunehmen. Alternativ kann die Nutbreite 35 in Richtung der Grundkörperoberseite 12 abnehmen. Die Nutbreite 35 der schrägen Seitenflächen der Nut 30 bestimmt, wie dick die zu haltenden, vorwiegend flachen, Mobilgeräte sein können. Der die Schwerkraft des Mobilgeräts 200 aufnehmende Bereich der Nut 30 kann so breit ausgeführt sein, dass bei waagrechter Positionierung der Mobilgerätehalterung 100 das eingestellte Mobilgerät 200 mechanischen Halt gegen seitliches Verkippen aufweist. Die Nut 30 ist so ausgeführt, dass das Mobilgerät 200 durch Reaktionskräfte auf ein Kippmoment in einer stabilen schrägen Position in der Nut 30 stabilisiert ist. Eine stabile schräge Position bedeutet in diesem Zusammenhang, dass neben der einen oder den mehreren Nuten 30 kein weiteres Fixier- oder Halteelement erforderlich ist um das Mobilgerät 200 in der Mobilgerätehalterung 100, bei waagrechter Auflage der Mobilgerätehalterung, zu fixieren. Die Nut 30 kann in Richtung einer oder beider der Grundkörperseitenteile 16 und 17 eine Nutaufweitung aufweisen, die geeignet ist Schall von Lautsprechern zu Mikrophonen oder von Mikrophonen zu Lautsprechern zu leiten. Alternativ oder ergänzend, kann die Nutaufweitung der Nut 30 nach unten, d.h. in Richtung der Grundkörperunterseite 13, und/oder nach vorne, d.h. in Richtung der Grundkörpervorderseite 16, geführt werden.

Der Grundkörper 10 weist einen Hohlraum 20 auf. Der Hohlraum 20 ist innerhalb des Grundkörpers 10 ausgeführt. Der Hohlraum 20 kann eine quaderförmige Form aufweisen. Der Hohlraum 20 ist seitlich versetzt zur Nut 30 angeordnet. Der Hohlraum 20 dient zur Aufbewahrung von Zubehör für das Mobilgerät 200, wie z.B. Energiespeicher, Kopfhörer, Mikrophone oder Verbindungskabel. Die in den Grundkörper 10 einsetzbaren Zubehörgeräte können Steckverbindungen für den Kontakt zu Mobilgeräten aufweisen. Diese Steckverbindungen können austauschbar gestaltet sein, um den unterschiedlichen Steckverbindern an verschiedenen Mobilgeräten gerecht zu werden. Der Hohlraum 20 kann durch das Verbinden von mindestens zwei Teilen des Grundkörpers 10 entstehen. In den Figuren 1 und 2 weist das Grundkörperseitenteil 19 eine seitliche Zugangsöffnung 21 zum Hohlraum 20 auf. Gegenüber der Zugangsöffnung 21 kann der Grundkörper 10 eine oder mehrere Ausnehmungen oder Öffnungen im Grundkörperseitenteil 18 aufweisen. Diese Ausnehmungen bzw. Öffnungen können formkomplementär zu Zubehörteilen, wie z.B. Anschlusssteckern, sein, um diese im Hohlraum 20 zu fixieren. Alternativ können beide Grundkörperseitenteile 18 und 19 eine Zugangsöffnung aufweisen.

Figur 1 zeigt eine vorwiegend quaderförmige Ausführungsform der erfindungsgemäßen Mobilgerätehalterung 100. Der Grundkörper 10 und die Nut 30 sind ein integrales Bauteil. Die Nut 30 kann in der wirksamen Breite bzw. Nutbreite 35 eingestellt werden durch die Anbringung eines Dicken- bzw. Ausgleichselements 50. Die Nutbreite 35 ist im Kontext der vorliegenden Offenbarung der Abstand zwischen dem vorderen Ende der Nut 30 in Richtung der Grundkörpervorderseite 16 und dem hinteren Ende der Nut 30 in Richtung der Grundkörperrückseite 17. Das Ausgleichselement 50 kann am hinteren Ende der Nut 30 angebracht sein. Auch die in den Figuren 2-16 gezeigten Nuten 30.1 und 30.2 können das hier beschriebene Ausgleichselement 50 aufweisen. Das Ausgleichselement 50 kann entlang des gesamten hinteren Endes der Nut 30 durchgehend oder mit einer oder mehreren Unterbrechungen ausgeführt sein. Das Ausgleichselement 50 kann haftend, rastend oder gesteckt ausgeführt sein. Wie in Figur 1 dargestellt, kann das Ausgleichselement 50 durch einen Magneten 51 an die Nut 30 gefügt sein. Das Ausgleichselement 50 dient der Einstellung der Nutbreite 35. Es kann zudem der Funktion der Einstellung eines Anstellwinkels 36 dienen, indem es im vertikalen Schnitt im eingesetzten Zustand in der Nut 30 im oberen Bereich, d.h. in Richtung der Grundkörperoberseite 12, eine andere Dicke als im unteren Bereich, d.h. in Richtung der Grundkörperunterseite 13, aufweist. Das Ausgleichselement 50 kann magnetisch und/oder durch Klemmkräfte in die Nut 30 gefügt sein. Das Ausgleichselement 50 kann ferner elastisch oder deformierbar sein.

Nach vorne in Längsrichtung, d.h. in Richtung der Grundkörpervorderseite 16, schließt an die Nut 30 eine Halteleiste 40 an. Die Halteleiste 40 und der Grundkörper 10 können ein integrales Bauteil sein, d.h. Grundkörper 10 und Halteleiste 40 können als einstückiges Bauteil ausgeführt sein. Alternativ kann die Halteleiste 40 an den Grundkörper 10 gefügt sein. Die Halteleiste 40 kann das vordere Ende der Nut 30 umfassen, wobei der Grundkörper 10 das hintere Ende der Nut 30 umfassen kann. Die Halteleiste 40 kann in allen gezeigten Figuren relativ zum Grundkörper 10 beweglich an den Grundkörper 10 gefügt sein, sodass durch eine Bewegung der Halteleiste 40 relativ zum Gründkörper 10 die Nutbreite 35 veränderbar ist. In diesen Ausführungsformen kann der Grundkörper 10 zweiteilig ausgeführt sein.

Die quaderförmige Halterung 100 kann grundsätzlich auch aus mindestens zwei Teilen zusammengesetzt sein, wobei die Teile unterschiedliche Werkstoffe aufweisen können. Figur 1 zeigt eine mittige Öffnung bzw. Nutöffnung 32 in Richtung der Grundkörperunterseite 13. Die Nutöffnung 32 ist unter der Nut 30 angeordnet und bildet einen Durchbruch der Nut 30 durch den Grundkörper 10 in Richtung der Grundkörperunterseite 13. Die Nutöffnung 32 ist in Richtung der Grundkörpervorderseite 16 durch einen Krümmungsbereich bzw. Nutkrümmungsbereich 34 ergänzt. Der Nutkrümmungsbereich 34 schafft eine Verbindung zwischen einem Durchbruch an der Unterseite der Grundkörpervorderseite 16 und der Nutöffnung 32 bzw. der Nut 30. Ein in das Mobilgerät 200 mittig eingesetztes Kabel kann über die Nutöffnung 32 und den Nutkrümmungsbereich 34 nach außen geführt werden. Der Nutkrümmungsbereich 34 kann auch seitlich, d.h. in Richtung eines der Grundkörperseitenteile 18 und 19, oder nach hinten, d.h. in Richtung der Grundkörperrückseite 17, verlaufen.

Figur 2 zeigt eine abgewandelte Ausführungsform der Vorrichtung aus Figur 1. Die Mobilgerätehalterung 100 weist eine abgeschrägte Grundkörpervorderseite 16 bzw. Halteleiste 40, parallele Grundkörperseitenteile 18 und 19 sowie eine senkrechte Grundkörperrückseite 17 auf. Die schräge Grundkörpervorderseite 16 sowie die Nut 30 sind mittig auf mehr als 10%, z.B. auf mehr als 40%, ihrer Breite durch eine Nutaussparung 33 unterbrochen. Die Nut 30 ist damit zweiteilig ausgeführt. Die Nut 30 unterteilt sich gemäß dieser Ausführungsform in zwei Nuten, eine rechte Nut 30.1 und eine linke Nut 30.2, wobei die Nuten 30.1 und 30.2 in einer gemeinsamen Ebene angeordnet sind. Im Kontext der Offenbarung kann die rechte Nut 30.1 als erstes Fixierteil und die linke Nut 30.2 als zweites Fixierteil bezeichnet werden.

In dieser Ausführungsform ist die Halteleiste 40 zweiteilig als Haltenocke auf dem Grundkörperseitenteil 16 und als Haltenocke auf dem Grundkörperseitenteil 17 ausgeführt. Das Ausgleichselement 50 kann auch ohne Magnet 51 so gestaltet sein, dass es in die Nutaussparung 33 eingreift und dadurch stabil befestigt wird. Wie in Figur 1, ist das Ausgleichselement 50 gemäß der Ausführungsform aus Figur 2 in der Nut 30 an der Fläche der Nut angebracht, die dem Hohlraum 20 näherliegt. Die Nutaussparung 33 ist im gezeigten Ausführungsbeispiel so gestaltet, dass ein Netzgerät bzw. Steckerladegerät in das Mobilgerät 200 (nicht dargestellt) eingeschoben werden kann, wenn das Mobilgerät in den Nuten 30.1 und 30.2 fixiert ist. Im Ausführungsbeispiel der Figur 2 ist an der Grundkörperunterseite 13 ein Befestigungselement 70, wie z.B. eine magnetische oder magnetisierbare Platte oder eine Rastvorrichtung, angebracht. Die Mobilgerätehalterung 100 kann somit mit einem korrespondierenden Befestigungsgegenstück stabil aber lösbar verbunden werden, wobei das Befestigungsgegenstück beispielsweise an einem Armaturenbrett eines Fahrzeuges einer Tischhalterung oder einem Stativ angefügt werden kann. Auch die Ausführungsformen der übrigen Figuren können über ein solches Befestigungselement verfügen.

Die Nut 30 bzw. Nuten 30.1 und 30.2 sowie die Halteleisten 40 können lösbar vom Grundkörper 10, z.B. mithilfe einer mechanischen Steckverbindung, ausgeführt sein. Der Grundkörper 10 kann so ausgeführt sein, dass er mit unterschiedlichen Nuten 30 und Halteleisten 40 bestückt werden kann, wobei die Nuten unterschiedliche Anstellwinkel 36 und/oder Nutbreiten 35 aufweisen.

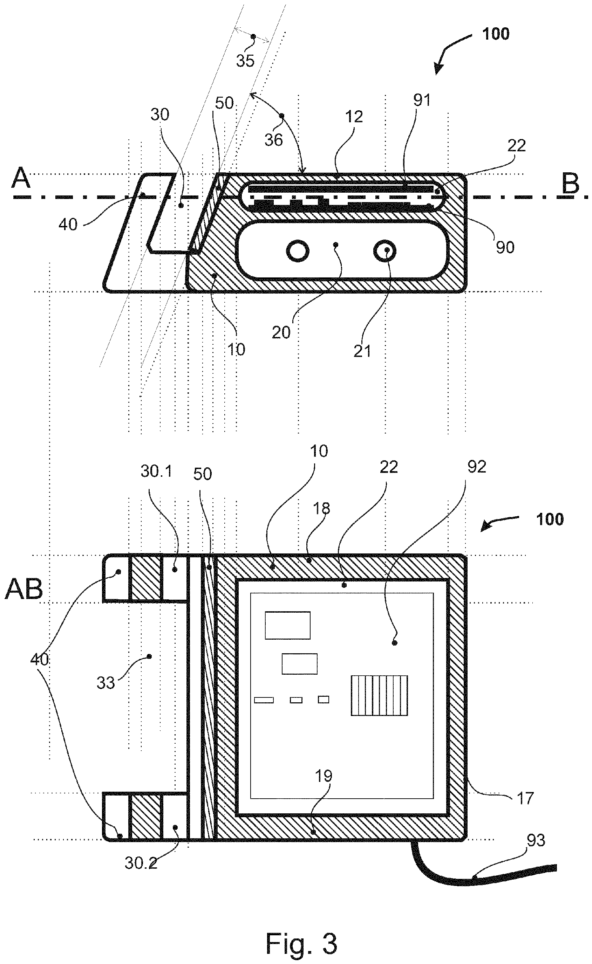

Die Figur 3 zeigt eine Ausführungsform der erfindungsgemäßen Mobilgerätehalterung 100 mit integrierter Elektronik 90 und integrierter drahtlos ladender Spule bzw. Ladeelement 91, wobei die integrierte Elektronik und drahtlos ladende Spule 90 und 91 in einem Zusatzholraum 22 angeordnet sind, der über dem Hohlraum 20 im Grundkörper 10 sowie seitlich versetzt zur Nut 30 positioniert ist. Zusätzlich weist die Halterung 100 eine Stromzuführung 93 auf, die von der Elektronik 90 nach außen aus dem Grundkörper 10 verläuft. Alternativ kann die Stromzuführung 93 von der Elektronik 90 zum Hohlraum 20 verlaufen, wo Kontakte angebracht sein können. Die elektrische Energie kann über ein Netzteil bereitgestellt werden oder über eine batterieartige Energiequelle. Die Energiequelle kann in der Mobilgerätehalterung 100 bzw. in den Hohlraum 20 einsetzbar sein. Im Kontext der vorliegenden Offenbarung kann die Energiequelle auch als Zelle, Akku, Stromspeicher, Energiespeicher, Batteriepack, Batterieeinheit, Batterieblock, Stromquelle, elektrischer Speicher, Energieversorger ausgeführt bzw. bezeichnet werden. Das Ladeelement 91 und/oder die Energiequelle können genutzt werden, um dazu in Verbindung gebrachte Geräte, wie z.B. das Mobilgerät 200 oder drahtlose Kopfhörer, aufzuladen (per Kabel oder drahtlos). Die Mobilgerätehalterung 100 kann über Steckanschlüsse für Kabel verfügen (nicht dargestellt). Dadurch können angesteckte weitere Geräte mit Energie und oder Daten versorgt werden.

Figur 4 zeigt eine Ausführungsform der erfindungsgemäßen Mobilgerätehalterung 100 entsprechend der Ausführungsform der Figur 3, wobei der Grundkörper 10 eine andere Bauweise aufweist. Grundkörpervorderseite 16, Grundkörperrückseite 17, Grundkörperseitenteil 18 und Grundkörperseitenteil 19 sind jeweils als einzelne Bauteile ausgeführt, die lösbar aneinandergefügt den Grundkörper 10 bilden, wobei das Grundkörperseitenteil 18 die rechte Nut 30.1 und das Grundkörperseitenteil 19 die linke Nut 30.2 aufweist. Die Grundkörpervorderseite 16 und Grundkörperrückseite 17 sind so ausgeführt, dass sie an unterschiedliche Grundkörperseitenteile 18 und 19 lösbar angefügt werden können, wobei unterschiedliche Grundkörperseitenteile 18 und 19 verschieden dimensionierte Nuten 30.1 und 30.2 aufweisen können. Die Grundkörperseitenteile 18 und 19 können aus Materialien hergestellt sein, die nicht dem Material der Grundkörpervorderseite 16 und Grundkörperrückseite 17 entsprechen, z.B. aus vergleichsweise biegefesten Schichtwerkstoffen oder faserverstärkten Werkstoffen. Die Seitenteile 18 und 19 können durch Spritzguss hergestellt sein und/oder eine gewichtsreduzierte Form aufweisen.

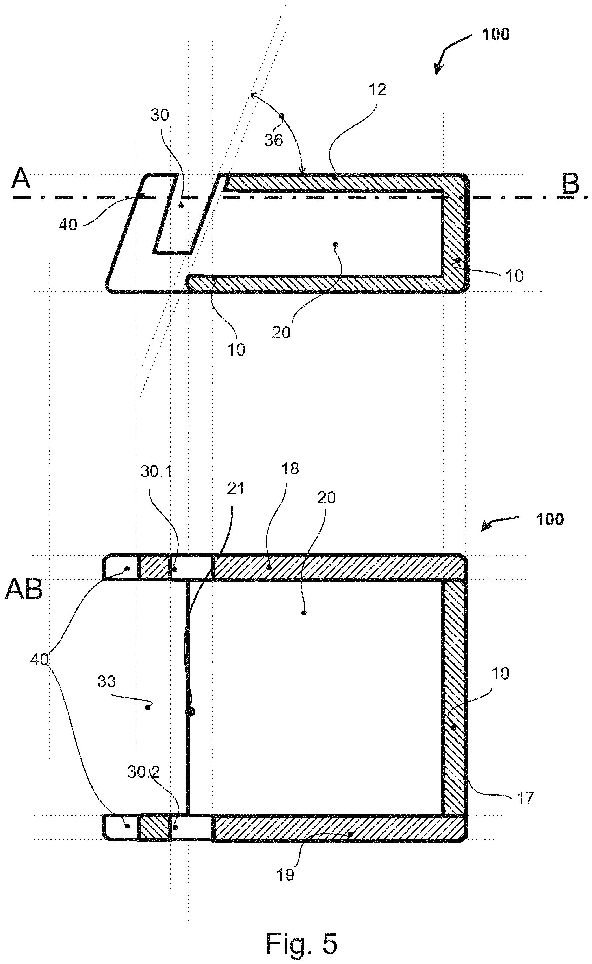

Figur 5 zeigt eine Ausführungsform der erfindungsgemäßen Mobilgerätehalterung 100, wobei die Zugangsöffnung 21 des Hohlraums 20 zwischen der rechten Nut 30.1 und der linken Nut 30.2 angeordnet ist. Die Zugangsöffnung 21 entspricht der Länge der Nutaussparung 33 bzw. dem Abstand zwischen der rechten Nut 30.1 und der linken Nut 30.2.

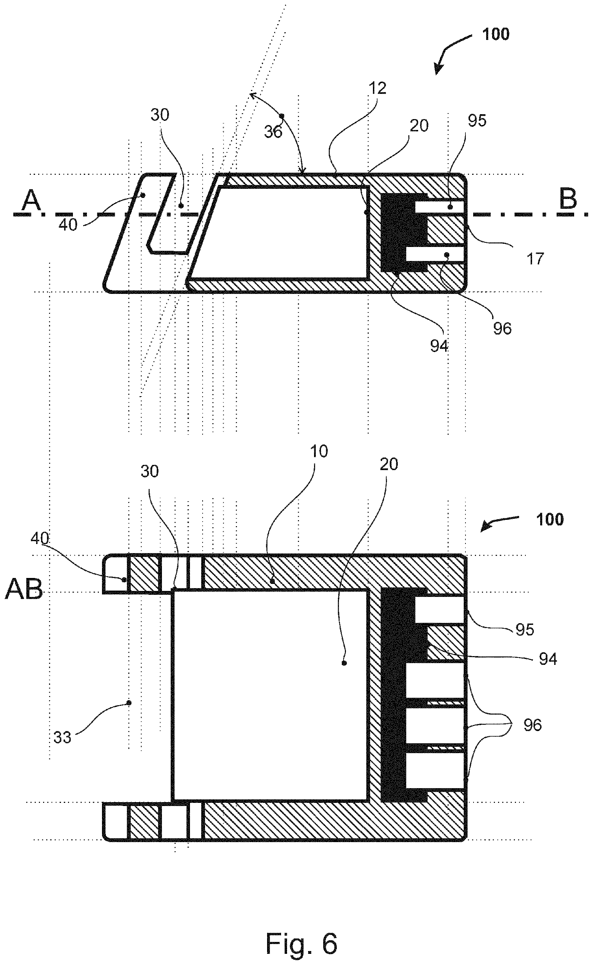

Figur 6 zeigt eine Ausführungsform der erfindungsgemäßen Mobilgerätehalterung 100 bei der die Grundkörperrückseite 17 einen Verteiler 94 für eingehende und ausgehende elektrische und/oder elektronische Verbindungen aufweist. Ebenso können die Ausführungsformen der übrigen Figuren mit einer derartigen Grundkörperrückseite 17 ausgeführt sein. Eine eingehende Steckbusche 95 kann als USB-C Buchse ausgebildet sein, ausgehende Steckbuchsen 96 können als gleichartige oder andere Verbindungstypen ausgebildet sein, z.B. USB-A oder USB-C. Der USB Verteilerbereich 94 kann mit einer Energiequelle und/oder dem Mobilgerät 200 verbunden sein (nicht dargestellt). Insbesondere kann an den USB Hub ein Steckernetzteil zur Energiezufuhr anschließbar sein. In allen gezeigten Ausführungsformen der Figuren 1-16 kann der Grundkörper 10 Steckverbinder enthalten, die über einen AC-DC Wandler oder einen DC-DC Wandler mit Strom versorgt werden können.

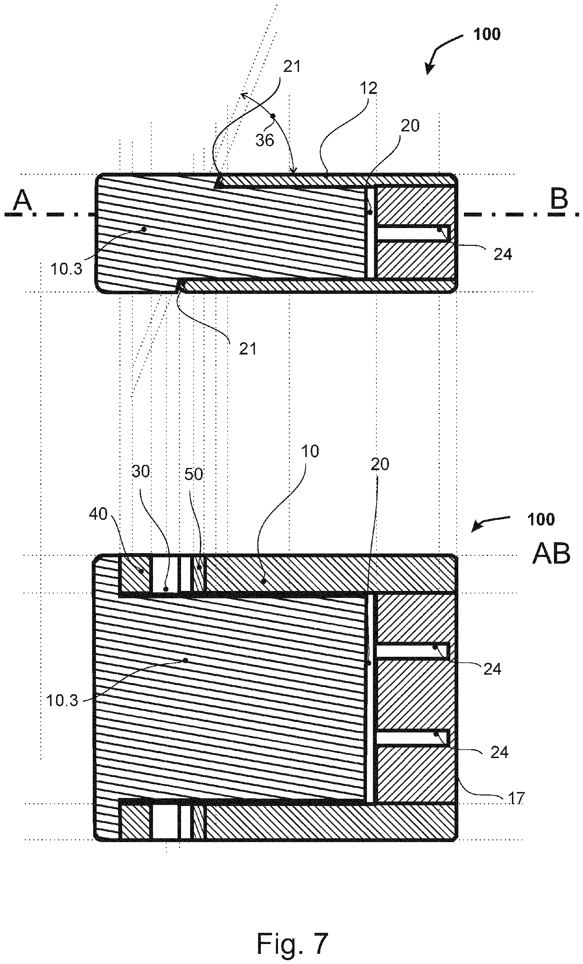

Fig. 7 zeigt eine erfindungsgemäße Mobilgerätehalterung 100 bei der die Zugangsöffnung 21 des Hohlraums 20, wie in Figuren 5 und 6, an der Grundkörpervorderseite 16 positioniert ist. Der Grundkörper 10 ist mit einem Einschub 10.3 verbunden. Der Einschub 10.3 ist durch die Zugangsöffnung 21 in den Hohlraum 20 eingeschoben. Die Zugangsöffnung 21 ist durch den Einschub 10.3 verschlossen. Der Einschub 10.3 reicht zumindest teilweise in den Hohlraum 20. Der Einschub 10.3 kann eine Batterie bzw. ein Energiespeicher sein. Der Einschub 10.3 kann auch als Ladegerät ausgeführt sein. Der Einschub 10.3 kann ein Netzgerät, z.B. ein Steckernetzgerät umfassen, das entnommen werden kann, um es in eine Steckdose einzusetzen. Der Einschub 10.3 kann ferner ein Kabel beinhalten, das der Verbindung zwischen Netzgerät und Halterung 100 oder Netzgerät und Mobilgerät 200 dient. In der Ausführungsform gemäß Figur 7 ist die Grundkörperrückseite 17 als ein austauschbarer Einsatz ausgeführt, der an die Grundkörperseitenteile 18 und 19 lösbar gefügt ist und zusammen mit diesen den Grundkörper 10 bildet. Die Grundkörperseitenteile 18 und 19 können so ausgeführt sein, dass unterschiedliche Einsätze bzw. Grundkörperrückseiten 17 mit ihnen verbunden werden können, um z.B. unterschiedliche Verteiler und unterschiedliche Steckverbinder integrieren zu können. Die Grundkörperrückseite 17 kann gemäß Figur 6 ausgeführt sein. Dadurch lässt sich die Mobilgerätehalterung 100 an unterschiedliche Kabel- und Steckernormen wir Lightning oder USB-C anpassen. Der Grundkörper 10 kann die Seitenteile 18 und 19 einstückig umfassen. Die Halteleisten 40 sowie die Nuten 30.1 und 30.2 werden im gezeigten Ausführungsbeispiel durch die Frontplatte des Einschubs 10.3 geschützt. Der Einschub 10.3 kann so ausgeführt sein, dass der Einschub 10.3 aus dem Hohlraum 20 entfernt werden muss um ein Mobilgerät in die Nuten 30.1 und 30.2 einfügen zu können. Auch die Ausführungsformen der Figuren 5-11 können mit dem Einschub 10.3 bestückt werden.

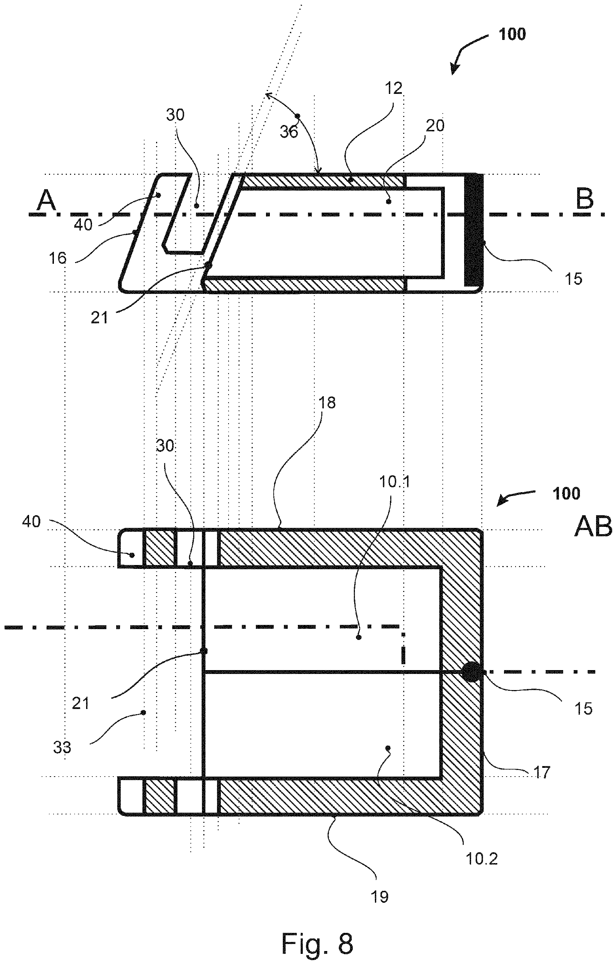

In den Ausführungsformen der Figuren 8-16 ist die Mobilgerätehalterung 100 mit einem mehrteiligen Grundkörper 10 ausgeführt, der zumindest ein erstes Grundkörperteil 10.1 und ein zweites Grundkörperteil 10.2 aufweist. Der Grundkörper 10 ist hierbei so ausgeführt, dass durch eine Bewegung des ersten Grundkörperteils 10.1 relativ zum zweiten Grundkörperteil 10.2 der Hohlraum 20 mindestens eine Öffnung erhält. Die Öffnung kann eine zusätzliche Öffnung des Hohlraums 20 sein oder die Zugangsöffnung 21 bereitstellen. Die Öffnung 21 bzw. zusätzliche Öffnung kann eine Größe aufweisen die geeignet ist ein oder mehrere Zubehörgeräte aus dem Hohlraum 20 zu entnehmen oder in den Hohlraum einzufügen. Figur 8 zeigt eine Mobilgerätehalterung 100 mit einem zweiteiligen Grundkörper 10. Der Grundkörper 10 weist eine symmetrische Trennung auf, die den Grundkörper in das erste und das zweite Grundkörperteil 10.1 und 10.2 aufteilt. Wie in allen Ausführungsformen der Figuren 8-16 kann das erste Grundkörperteil 10.1 lösbar an das zweiten Grundkörperteil 10.2 gefügt sein, wobei das erste Grundkörperteil 10.1 durch eine lösbare Magnetverbindung an das zweite Grundkörperteil 10.2 gefügt werden kann. Das erste und zweite Grundkörperteil 10.1 und 10.2 können symmetrisch aufgebaut sein und dasselbe Volumen bzw. dieselbe Masse aufweisen. In den Figuren 8-11 weist die Grundkörpervorderseite 16 die Zugangsöffnung 21 zum Hohlraum 20 auf. Der Hohlraum 20 ist in zwei gleichgroße Hohlräume geteilt. Das erste Grundkörperteil 10.1 ist mithilfe eines Scharnierelements 15 mit dem zweiten Grundkörperteil 10.2 verbunden und gegenüber diesen schwenkbar gelagert. Das Scharniergelenk bzw. Scharnierelement 15 ist an der Grundkörperrückseite 17 zwischen dem ersten und zweiten Grundkörperteil 10.1 und 10.2 mittig angeordnet. Der zweiteilige Grundkörper 10 kann so ausgeführt sein, dass der Hohlraum 20 vollständig verschlossen ist, wenn das erste Grundkörperteil 10.1 entlang der Trenn- bzw. Symmetrielinien vollständig an den zweiten Grundkörperteil 10.2 anliegt. In dieser nicht dargestellten Ausführungsform weist die Grundkörpervorderseite 16 keine Zugangsöffnung 21 auf sobald beide Grundkörperteile 10.1 und 10.2 vollständig aneinander liegen. Alternativ, wie in den Figuren 8-11 dargestellt, kann der zweiteilige Grundkörper 10 so ausgeführt sein, dass der Hohlraum 20 teilweise verschlossen ist, wenn das erste Grundkörperteil 10.1 entlang der Trenn- bzw. Symmetrielinien vollständig an das zweite Grundkörperteil 10.2 anliegt. In dieser Ausführungsform weist die Grundkörpervorderseite 16 eine Zugangsöffnung 21 zum Hohlraum 20 auf, auch wenn beide Grundkörperteile 10.1 und 10.2 vollständig aneinander liegen. Der Grundkörper 10 kann so ausgeführt sein, dass keine Relativbewegung zwischen dem ersten Grundkörperteil 10.1 und dem zweiten Grundkörperteil 10.2 möglich ist, sobald der Einschub 10.3 mit dem Grundkörper 10 verbunden ist. Der Einschub 10.3 dient somit als Verriegelungselement und kann im Kontext der vorliegenden Offenbarung demnach auch als drittes Grundkörperteil oder Verschlusselement bezeichnet werden. Die Verbindung aus Einschub 10.3 und den Grundkörperteilen 10.1 und 10.2 kann auch durch ein Kabel bereitgestellt oder unterstützt werden, dass um die Verbindung aus den Grundkörperteilen 10.1, 10.2 und 10.3 gewunden wird.

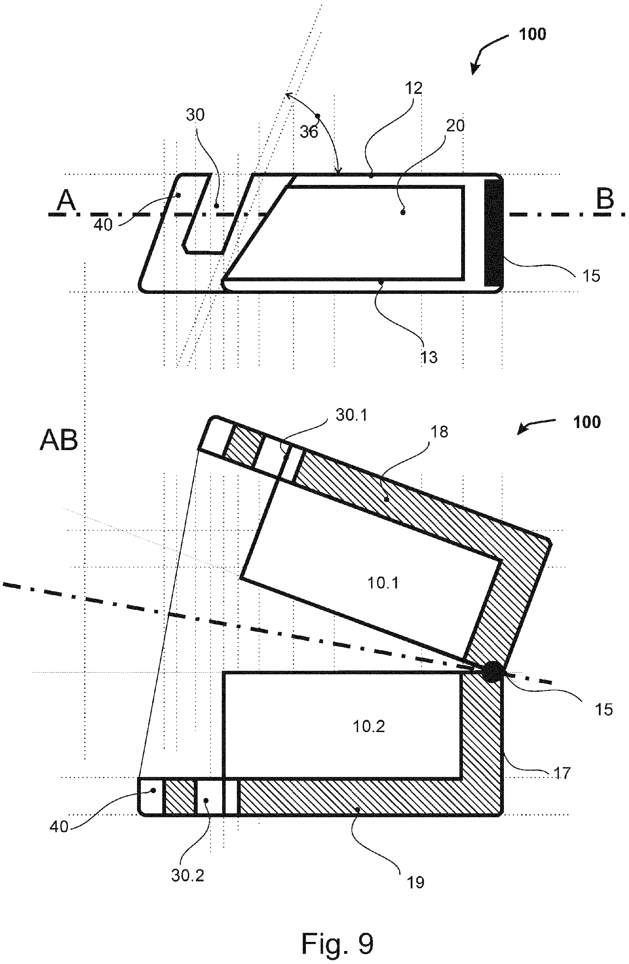

Figur 9 zeigt die Mobilgerätehalterung 100 der Ausführungsform aus Figur 8 in aufgeklappter Position. Hierbei ist der Einschub 10.3 nicht eingesetzt, da dies das Ausschwenken des Grundkörpers 10 blockieren würde. Die Halterung 100 der Figur 8 und 9 ist so ausgeführt, dass der Einschub 10.3 ausschließlich im zusammengeklappten Zustand des Grundkörpers 10 mit dem Grundkörper verbunden werden kann. Die Zugangsöffnung 21 des Hohlraums 20 ist in Richtung der Grundkörperrückseite 17 versetzt von der Nut 30 bzw. den Nuten 30.1 und 30.2 angeordnet, sodass das Mobilgerät 200 in aufgeklappter Stellung der Halterung 100 weder an die Grundkörperoberseite 12 noch an die Grundkörperunterseite 13 stoßen kann.

Figur 10 zeigt eine Seitenansicht eines Schnitts der Mobilgerätehalterung 100 der Figuren 8 und 9 mit eingesetztem Mobilgerät 200. Figur 11 zeigt die Mobilgerätehalterung 100 mit eingesetztem Mobilgerät 200 in aufgeklappter Position in Draufsicht, gesehen im Schnitt entlang der Linie AB in Fig. 10. Das Mobilgerät 200 neigt sich so weit, wie die mechanischen Anschlagpunkte in der Nut 30, bzw. den Nuten 30.1 und 30.2, dies zulassen. Die Breite der Nut 30 reduziert sich im aufgeklappten Zustand mit dem Kosinus des halben Öffnungswinkels der Grundkörperteile 10.1 und 10.2. Demnach stellt die Mobilgerätehalterung 100 ein Fixiermittel bereit, umfassend die beiden Nuten 30.1 und 30.2, dass durch die Bewegung des ersten Grundkörperteils 10.1 relativ zum zweiten Grundkörperteil 10.2 an die Abmessungen des Mobilgeräts 200 angepasst werden kann.

Die Ausführungsformen mit schwenkbaren Grundkörperteilen können eine Grundkörperrückseite 17 gemäß der gezeigten Ausführungsform der Figur 7 aufweisen. Die Grundkörperrückseite 17 kann demnach Ausnehmungen 24 aufweisen, die zum Lagern der Steckerstifte eines Netzteils geeignet sind. Die Grundkörperrückseite 17 kann so ausgeführt sein, dass die Steckerstiftausnehmungen 24 zusammen mit den Stiften des Netzteils eine Schwenkbewegung des ersten Grundkörperteils 10.1 relativ zum zweiten Grundkörperteil 10.2 blockieren wenn das Netzteil im Hohlraum 20 positioniert ist. In dieser Ausführungsform (nicht dargestellt) kann das Scharniergelenk 15 in Querrichtung der Halterung 100 zwischen einer ersten und einer zweiten Steckerstiftausnehmung 24 mittig auf der Grundkörperrückseite 17 angeordnet sein.

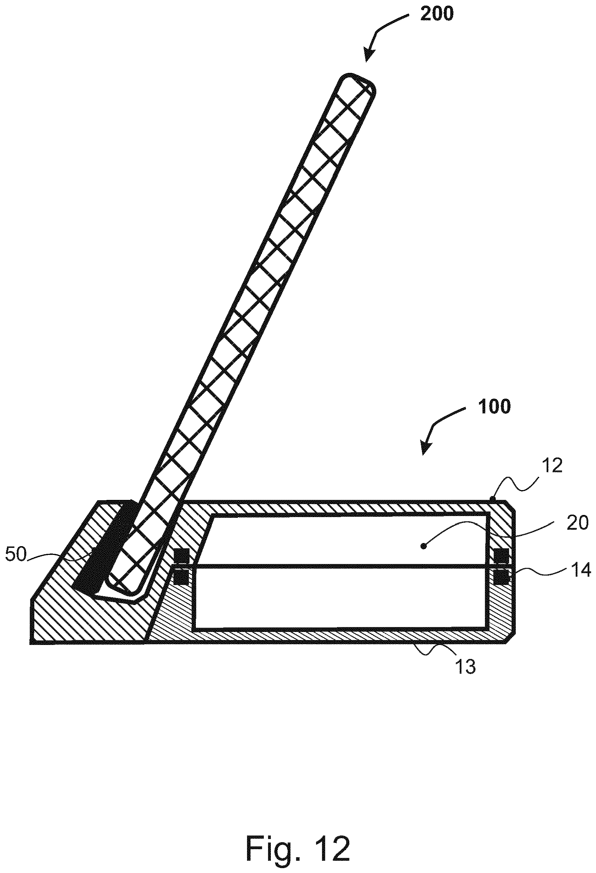

Figur 12-15 zeigen eine zweiteilige Mobilgerätehalterung 100 in zusammengesetzter Anordnung ohne Scharnier mit eingesetztem Mobilgerät 200. Die Grundkörperunterseite 13 ist mithilfe eines Magnetpaares 14 an die Grundkörperoberseite 12 lösbar gefügt. Die Nut 30 ist ein integraler Bestandteil der Grundkörperoberseite 12. Das Dickenausgleichselement 50 ist in die Nut 30 eingesetzt, wobei das Ausgleichselement 50 einen keilförmigen Querschnitt aufweist. Das Ausgleichselement 50 drückt die Unterkante des Mobilgeräts 200 in Richtung des Hohlraums 20. Die Querschnittsbreite der Nut 30 ist durch das Ausgleichselement 50 einstellbar. Das Ausgleichselement 50 kann in allen Ausführungsformen der Figuren 1-16 planparallele oder zueinander geneigte Flächen aufweisen. Ebenso kann das Ausgleichselement 50 magnetisch sein oder magnetische Elemente umfassen, sodass das Mobilgerät 200 durch Magnetkräfte in der Nut 30 gehalten wird. Ferner kann die Nut 30 magnetisch sein oder magnetische Elemente umfassen, die insbesondere zur magnetischen Befestigung des Ausgleichselementes 50 dienen.

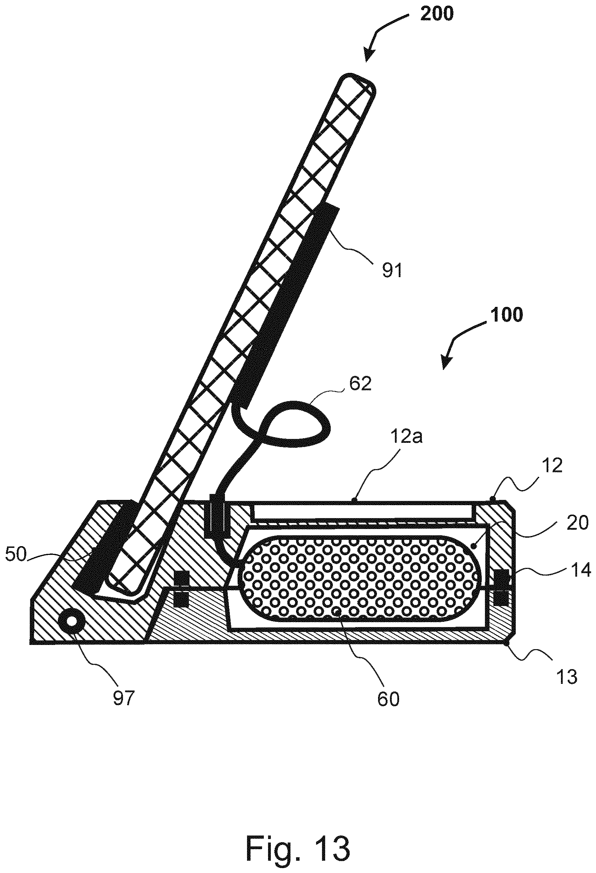

Figur 13-15 zeigen die Mobilgerätehalterung 100 mit zweiteiligem Grundkörper 10 in zusammengesetzter Anordnung ohne Scharnier entsprechend der Ausführungsform der Figur 12. Wie in allen Ausführungsformen der Figuren 1-16 ist der Hohlraum 20 geeignet Zubehör wie z.B. eine Energiequelle 60 oder ein Netzteil 61, wie z.B. ein AC-DC Netzgerät, aufzunehmen. Die Energiequelle 60 kann benutzt werden um über ein Kabel 62 eine induktives Ladeelement 91 mit Strom zu versorgen. Die Energiequelle 60 ist im Hohlraum 20 zwischen dem ersten und zweiten Grundkörperteil 10.1 und 10.2 eingesetzt. Auf das Ladeelement 91 können zu ladende Mobilgeräte gelegt werden, z.B. eine Smartwatch oder eine Box für ein drahtloses Headset. Das induktive Ladeelement 91 kann durch kabelloses Laden geeignet sein das Mobilgerät 200 sowie Mobilgerätzubehör, wie z.B. kabellose Kopfhörer, mit Energie zu versorgen. Das Kabel 62 kann jeweils über eine lösbare Steckverbindung mit Energiequelle 60 und dem induktiven Ladeelement 91 verbunden sein. Das Kabel 62 kann genutzt werden um das induktive Ladeelement 91 oder die Energiequelle 60 mit dem Netzteil 61 zu verbinden. Zum Laden des Mobilgeräts 200 kann das Kabel 62 so ausgeführt sein, dass eine unmittelbare Verbindung zwischen Mobilgerät 200 und Energiequelle 60 durch das Kabel bereitgestellt wird. In allen Ausführungsformen der vorliegenden Offenbarung kann das Netzteil 61 ein Netzsteckertyp der Typen A-L sein. Das induktive Ladeelement 91 kann aus dem Grundkörper 10 entnehmbar gestaltet sein, so dass es an das in der Nut 30 aufgestellte Mobilgerät 200 direkt angebracht werden kann, um dieses induktiv zu laden.

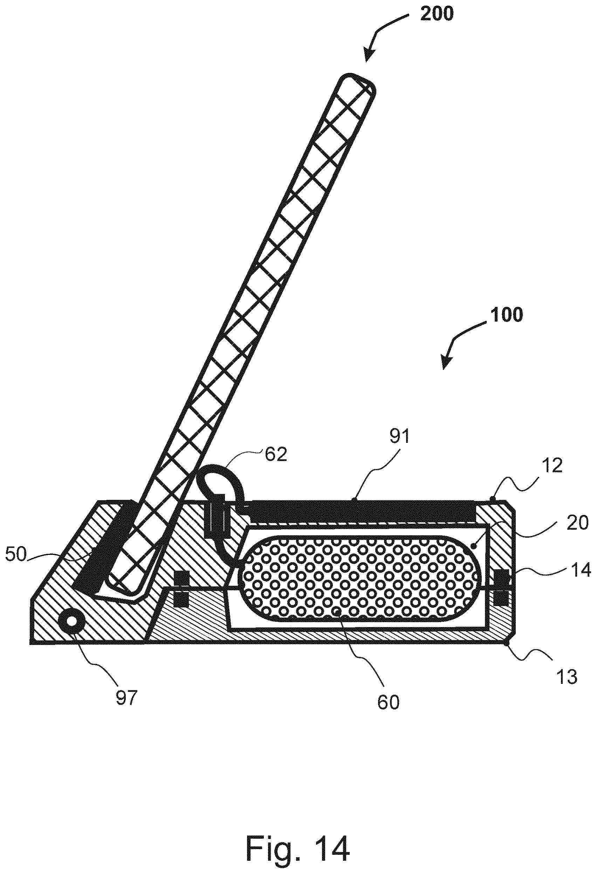

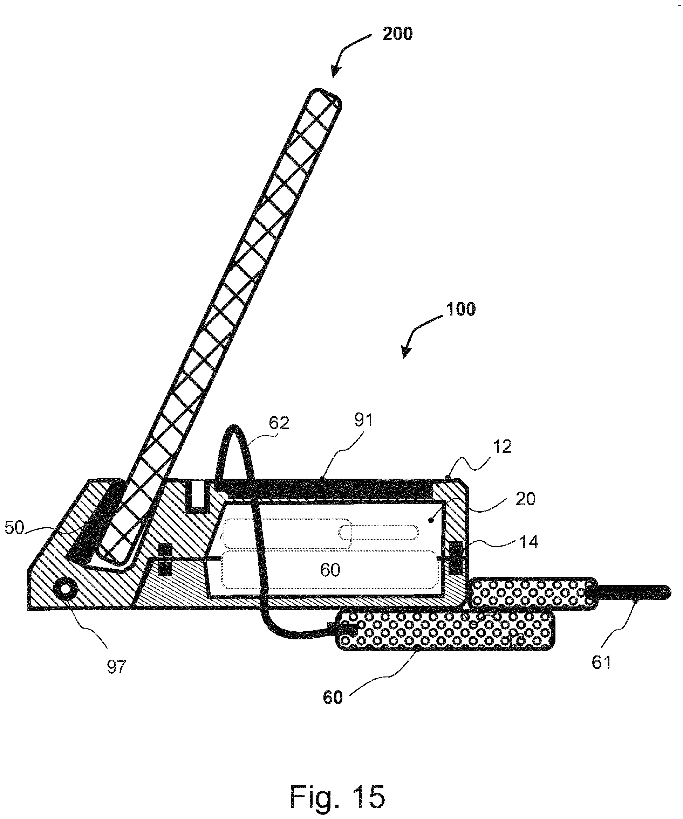

Wie in Figur 13 zu sehen, kann das induktive Ladeelement 91 durch Magnetkraft an der Rückseite eines entsprechend ausgestatteten Mobilgeräts 200 haften. Die Grundkörperoberseite 12 weist eine Oberteilausnehmung 12a auf, die geeignet ist das induktive Ladeelement 91 aufzunehmen. Wie in den Figuren 14 und 15 gezeigt, ist die Oberteilausnehmung 12a und das induktive Ladeelement 91 so ausgeführt, dass die Grundkörperoberseite 12 eine plane Ebene bildet, wenn das induktive Ladeelement 91 in die Oberteilausnehmung 12a eingelegt ist.

Figur 15 zeigt die Ausführungsform der Figuren 13 und 14 mit abgewandelter Energiequelle 60. Der Hohlraum 20 ist geeignet u.a. die Energiequelle 60 sowie das Steckernetzteil 61 aufzunehmen. Das Steckernetzteil 61 ist an die Energiequelle 60 gefügt. Das Steckernetzteil 61 kann an verschiedenen Stellen an die Energiequelle 60 angebracht werden. Alternativ oder ergänzend kann das Steckernetzteil 61 so an die Energiequelle 60 gefügt sein, dass das Steckernetzteil relativ zur Energiequelle bewegt bzw. verschoben werden kann, insbesondere um die Gesamtlänge der Verbindung aus Energiequelle und Steckernetzeil zu reduzieren. Das Steckernetzteil 61 und/oder die Energiequelle 60 können aus dem Hohlraum 20 entnommen werden und verfügen über ein nicht gezeigtes Befestigungselement, wobei das Befestigungselement dazu ausgeführt ist die Grundkörperunterseite 13, oder einen beliebigen anderen Bereich des Grundkörpers 10 der Mobilgerätehalterung 100, an die Verbindung aus Steckernetzteil und Energiequelle zu befestigen. Der Grundkörper 10 verfügt über ein geeignetes mechanisches Befestigungselement als Gegenpart. Wie in Figur 15 gezeigt, kann die Grundkörperunterseite 13 der Mobilgerätehalterung 100 das geeignete mechanische Befestigungselement als Gegenpart aufweisen. Die Energiequelle 60 und/oder das Steckernetzteil 61 können eine Auflagefläche bereitstellen. Diese Auflagefläche ist so ausgeführt, dass die Mobilgerätehalterung 100 auf der Auflagefläche in einer waagrechten bzw. horizontalen Position gehalten wird, wenn das Steckernetzteil 61 in eine Steckdose gesteckt ist. Somit ist die Verbindung aus Energiequelle 60 und Steckernetzteil 61 geeignet die Mobilgerätehalterung 100 in einer horizontalen Position an eine vertikale Fläche zu fügen.

Alle Ausführungsformen der Figuren 1-16 können mindestens eine Ladesteckverbindung 97 aufweisen. Wie in den Figuren 13-15 dargestellt, kann die Ladesteckverbindung 97 in Richtung der Grundkörperunterseite 13 unter der Nut 30 im Grundkörper 10 angeordnet sein. Die Ladesteckverbindung 97 kann zum Laden und Aufnehmen von Kopfhörern, wie z.B. drahtlosen Kopfhörern geeignet sein. Die Laddesteckverbindung 97 kann an der Grundkörperoberseite 12 oder, wie in den Figuren 13-15 gezeigt, an einer der Grundkörperseitenteile 18 und 19 angebracht sein. Die Grundkörperseitenteile 18 und 19 können jeweils eine Ladesteckverbindung 97 aufweisen. Alternativ kann auch ausschließlich das rechte oder das linke Grundkörperseitenteil über zwei Ladesteckverbindungen 97 verfügen. Die Energieübertragung von der Ladesteckverbindung 97 zum Kopfhörer kann entweder mit elektrischem Kontakt oder induktiv erfolgen. Das induktive Ladeelement der Steckverbindung 97 kann eine Ringspule oder Torusspule aufweisen. Drahtlose Kopfhörer wie iPods oder andere EarPods können somit ohne die handelsüblichen zugehörigen kleinen Aufbewahrungs- und Ladeboxen aufgeladen werden. Alternativ können die EarPods zum Aufladen in die Ladebox gesteckt und gemeinsam mit der Box auf das induktive Ladeelement 91 gelegt werden. Die elektrische Steckverbindung 97 kann ferner auch für Datentransfer ausgestattet sein. Die elektrische Steckverbindung 97 kann durch die Energiequelle 60 mit Strom versorgt werden.

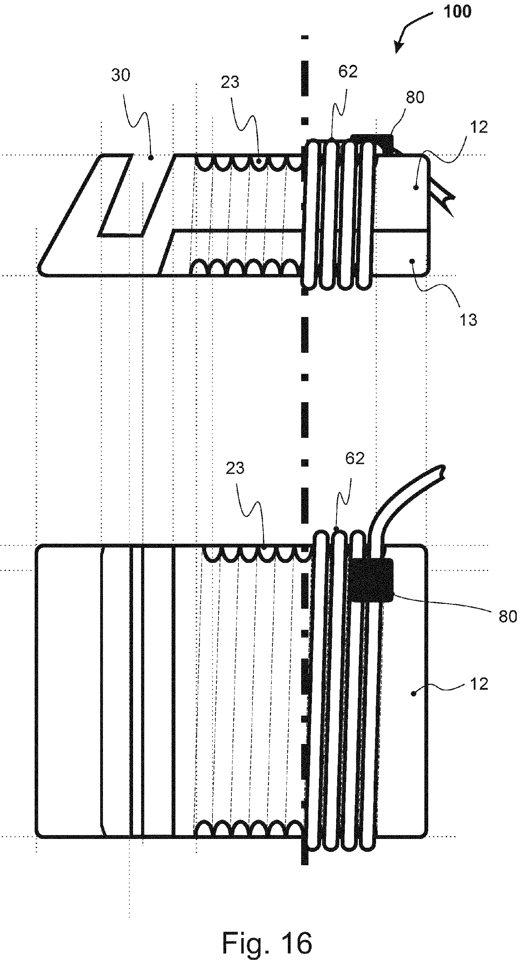

Bei den erfindungsgemäßen Mobilgerätehalterungen 100 mit mehrteiligen Grundkörper 10 kann das Kabel 62, oder ein beliebiges anderes Kabel, dazu geeignet sein das Verbinden der Grundkörperteile zu unterschützen. Das Kabel kann demnach geeignet sein das erste Grundkörperteil 10.1 mit dem zweiten Grundkörperteil 10.2 zu verbinden um somit den Hohlraum 20 zu verschließen. Im Kontext der vorliegenden Offenbarung kann das Kabel demnach auch als Verschlusselement bezeichnet werden. Die Mobilgerätehalterung 100 kann mindestens ein Teil aufweisen, z.B. das Grundkörperoberteil 12 und/oder das Grundkörperunterteil 13, das Einkerbungen aufweist, in die das Kabel 62 im aufgewickelten Zustand einrasten kann. Figur 16 zeigt eine erfindungsgemäße Ausführungsform bei der ein Kabel, wie z.B. das Kabel 62, so ausgeführt ist, dass es um den Grundkörper 10, d.h. um die Verbindung aus ersten und zweiten Grundkörperteil 10.1 und 10.2, gewunden werden kann. Dadurch kann das erste Grundkörperteil 10.1 an das zweite Grundkörperteil 10.2 gefügt werden bzw. die Verbindung aus den beiden Grundkörpern 10.1 und 10.2 zusätzlich unterstützt werden. Der Grundkörper 10 weist in dieser Ausführungsform Einkerbungen 23 auf die z.B. in die Kanten des Grundkörpers 10 bzw. die Kanten der Grundkörperteile 10.1 und 10.2 eingebracht sind. Die Einkerbungen 23 können als Führung für das Kabel 62 ausgeführt sein um ein ungewolltes Verschieben der Kabelwickelung relativ zum Grundkörper 10 zu verhindern. Wie in Figur 16 gezeigt, kann das erste und zweite Grundkörperteil 10.1 und 10.2 die Einkerbungen 23 entlang der Kanten aufweisen, die die Übergänge von der Grundkörperoberseite 12 bzw. Grundkörperunterseite 13 zu den Grundkörperseitenteilen 18 und 19 bilden. Die Einkerbungen 23 können in einer Reihe angeordnet sein, wobei deren Abstand größer ist als der Durchmesser des Kabels 62. Um die notwendige mechanische Spannung und Relativposition im Kabel 62 zu halten, insbesondere am losen Ende, kann eine lokale Kabelhalterung 80 vorgesehen sein, die die letzte Windung der Kabelwicklung relativ zu einer vorhergehenden Windung lösbar fixiert. Die lokale Kabelhalterung 80 kann an eine Außenfläche des Grundkörpers 10 gefügt sein. Die Kabelwickelung kann sowohl zum Verstauen eines längeren Zubehörkabels, wie z.B. eines Netzkabels, dienen als auch die Verbindung der Grundkörperteile bereitstellen oder unterstützen, sodass während des Transports der Mobilgerätehalterung 100 ein unbeabsichtigtes Verschieben, Öffnen oder Aufklappen der Grundkörperteile verhindert wird. Das Kabel 62 bzw. die Kabelwicklung kann auch genutzt werden um die Grundkörperteile 10.1, 10.2 und 10.3 miteinander zu verbinden und eine relative Bewegung der Grundkörperteile 10.1, 10.2 und 10.3 zueinander einzuschränken.

### Bezugszeichenlist

- 10: Grundkörper
- 10.1: Erstes Grundkörperteil
- 10.2: Zweites Grundkörperteil
- 10.3: Drittes Grundkörperteil / Einschub

- 12: Grundkörperoberseite
- 12a: Oberteilausnehmung
- 13: Grundkörperunterseite
- 14: Magnetpaar
- 15: Scharnierelement
- 16: Grundkörpervorderseite
- 17: Grundkörperrückseite
- 18: Grundkörperseitenteil
- 19: Grundkörperseitenteil

- 20: Hohlraum
- 21: Zugangsöffnung
- 22: Zusatzhohlraum
- 23: Einkerbung
- 24: Steckerstiftausnehmung

- 30: Nut
- 30.1: Rechte Nut
- 30.2: Linke Nut
- 32: Nutöffnung
- 33: Nutaussparung
- 34: Nutkrümmungsbereich
- 35: Nutbreite
- 36: Anstellwinkel

- 40: Halteleiste
- 50: Ausgleichselement
- 51: Magnet

- 60: Energiequelle
- 61: Netzteil
- 62: Kabel

- 70: Befestigungselement

- 80: Kabelhalterung

- 90: Elektronik
- 91: Induktives Ladeelement
- 93: Stromzuführung
- 94: Verteiler
- 95: Eingehende Steckbuchse
- 96: Ausgehende Steckbuchse
- 97: Ladesteckverbindung

- 100: Mobilgerätehalterung

- 200: Mobilgerät

## Patentansprüche

1. Mobilgerätehalterung (100), umfassend:
ein Fixiermittel zur Fixierung eines Mobilgeräts (200);
einen Grundkörper (10); und
einen Hohlraum (20) zur Aufbewahrung von Zubehör für das Mobilgerät, wobei der Hohlraum im Grundkörper angeordnet ist.

2. Mobilgerätehalterung (100) nach Anspruch 1, wobei der Grundkörper (10) ein erstes Grundkörperteil (10.1) und ein zweites Grundkörperteil (10.2) aufweist, wobei das erste Grundkörperteil mit dem zweiten Grundkörperteil verbunden ist, und wobei optional
- die Verbindung zwischen dem ersten Grundkörperteil und dem zweiten Grundkörperteil eine wiederherstellbare, lösbare Verbindung ist und/oder
- das erste Grundkörperteil und das zweite Grundkörperteil durch eine Magnetverbindung miteinander verbunden sind und/oder
- das Fixiermittel mindestens ein Ausgleichselement (50) aufweist.

3. Mobilgerätehalterung (100) nach einem der vorhergehenden Ansprüche, wobei die Mobilgerätehalterung eine Energiequelle (60) aufweist und der Hohlraum (20) geeignet ist die Energiequelle (60) aufzunehmen.

4. Mobilgerätehalterung (100) nach Anspruch 3, wobei die Energiequelle (60) geeignet ist die Mobilgerätehalterung in einer horizontalen Position an eine vertikale Fläche lösbar zu fügen.

5. Mobilgerätehalterung (100) nach einem der Ansprüche 2-4, wobei die Mobilgerätehalterung ein Kabel (62) aufweist, und wobei das Kabel geeignet ist
- das erste Grundkörperteil (10.1) mit dem zweiten Grundkörperteil (10.2) zu verbinden und/oder
- eine Bewegung des ersten Grundkörperteils relativ zum zweiten Grundkörperteil zu blockieren.

6. Mobilgerätehalterung (100) nach einem der Ansprüche 2-5, wobei die Mobilgerätehalterung ein Netzteil (61) aufweist, und wobei das Netzteil geeignet ist
- im Hohlraum (20) gelagert zu werden und/oder
- eine Bewegung des ersten Grundkörperteils (10.1) relativ zum zweiten Grundkörperteil (10.2) zu blockieren.

7. Mobilgerätehalterung (100) nach einem der Ansprüche 2-6, wobei die Mobilgerätehalterung so ausgeführt ist, dass durch eine Bewegung des ersten Grundkörperteils (10.1) relativ zum zweiten Grundkörperteil (10.2) eine Zugangsöffnung (21) zum Hohlraum (20) zur Entnahme des Zubehörs geschaffen wird.

8. Mobilgerätehalterung (100) nach einem der Ansprüche 2-7, wobei das erste Grundkörperteil (10.1) beweglich mit dem zweiten Grundkörperteil (10.2) verbunden ist.

9. Mobilgerätehalterung (100) nach einem der Ansprüche 2-8, wobei die Mobilgerätehalterung so ausgeführt ist, dass durch die Bewegung des ersten Grundkörperteils (10.1) relativ zum zweiten Grundkörperteil (10.2) das Fixiermittel an die Abmessungen des Mobilgeräts (200) anpassbar ist.

10. Mobilgerätehalterung (100) nach einem der Ansprüche 2-9, wobei das erste Grundkörperteil (10.1) mit dem zweiten Grundkörperteil (10.2) schwenkbar verbunden ist.

11. Mobilgerätehalterung (100) nach einem der Ansprüche 2-10, wobei der Grundkörper (10) ein drittes Grundkörperteil (10.3) aufweist, und wobei die Mobilgerätehalterung so ausgeführt ist, dass eine Bewegung des ersten Grundkörperteils (10.1) relativ zum zweiten Grundkörperteil (10.2) blockiert ist, wenn das dritte Grundkörperteil mit dem ersten und zweiten Grundkörperteil lösbar verbunden ist.

12. Mobilgerätehalterung (100) nach einem der Ansprüche 2-11, wobei das Fixiermittel ein erstes Fixierteil (30.1) und ein zweites Fixierteil (30.2) aufweist, und wobei das erste Fixierteil an dem ersten Grundkörperteil (10.1) und das zweite Fixierteil an dem zweiten Grundkörperteil (10.2) angeordnet ist, sodass das erste Fixierteil mit dem ersten Grundkörperteil und das zweite Fixierteil mit dem zweiten Grundkörperteil beweglich ist.

13. Mobilgerätehalterung (100) nach Anspruch 7 und einem der Ansprüche 8-12, wobei die Zugangsöffnung (21) von einer Grundkörpervorderseite (16) zugänglich ist.

14. Mobilgerätehalterung (100) nach einem der vorhergehenden Ansprüche, wobei der Hohlraum (20) seitlich zwischen dem Fixiermittel und einem Scharniergelenk (15) im Grundkörper (10) angeordnet ist.

15. Mobilgerätehalterung (100) nach einem der vorherigen Ansprüche, wobei das Mobilgerät (200) ein Smartphone und/oder ein Tablet ist.
